# EUROPÄISCHE PATENTANMELDUNG

(11) **EP 0 609 800 A1**
(43) Veröffentlichungstag der Anmeldung: **10.08.1994**
(21) Anmeldenummer: 94101376.5
(22) Anmeldetag: 31.01.1994
(51) Int. Cl.: H02P 7/00, H02K 19/10, H02K 11/00

(54) **Geschalteter Reluktanzmotor als Traktionsmotor für elektrisch angetriebene Fahrzeuge**

(30) Priorität: 01.02.1993 DE 4311274
(71) Anmelder: Licentia Patent-Verwaltungs-GmbH, D-60596 Frankfurt (DE)
(72) Erfinder: Dustmann, Cord-Henrich, Dr. rer. nat., D-69469 Weinheim (DE); Altmann, Manfred, Dipl.-Ing., D-26133 Oldenburg (DE); Lindig, Christian, Dipl.-Ing., D-26188 Edewecht-Friedrichsfehn (DE)
(74) Vertreter: Vogl, Leo, Dipl.-Ing.

(57) **Zusammenfassung**

Durch Hochenergiebatterien ist es möglich geworden, auch Personenkraftfahrzeuge mit Elektroantrieb auszurüsten. Für diesen Zweck sind bislang Asynchron- und Synchronmotoren mit Umrichtern bekannt. Erfindungsgemäß wird als Traktionsmotor, insbesondere für elektrisch angetriebene Fahrzeuge ein geschalteter Reluktanzmotor eingesetzt, welcher gekennzeichnet ist durch einen Rotor mit n x 4 Rotorpolen, einen Stator mit n x 3 Paaren entgegengesetzter Statorpole und mit je einer um jeden Statorpol gewickelten Statorpolwicklung, n-Paare entgegengesetzter Statorpole für jede Motorphase, wobei n größer als oder gleich zwei ist, und durch einen Wechselrichter (71) mit mehreren parallel zueinander geschalteten Wechselrichterphasenzweigen, wobei jeder Wechselrichterphasenzweig einer Motorphase entspricht und mindestens einen Leistungsschalter (73, 75, 77, 79, 81, 83) aufweist.

## Beschreibung

Durch die Entwicklung von Hochenergiebatterien ist es möglich geworden, auch Personenkraftwagen mit Elektroantrieb auszurüsten. Die bisher bekannten Antriebssysteme verwenden hierfür Asynchronmaschinen mit Umrichter und Synchronmaschinen mit Umrichter. Da die Synchronmaschinen aber den Nachteil haben, daß sie meist mit sehr hohen Strömen arbeiten, ist daher der Asynchronmaschine, insbesondere auch wegen ihrer Robustheit der Vorzug zu geben.

Es werden auch bereits geschaltete Reluktanzmotoren für Positionierungsantriebe in Kraftfahrzeugen, insbesondere in Gebläsen von Kraftfahrzeugen, eingesetzt, da diese sich ebenfalls durch einen einfachen und robusten Aufbau auszeichnen und außerdem preiswert und wartungsfrei sind. Diese geschalteten Reluktanzmotoren haben üblicherweise mehrere Pole sowohl auf dem Ständer als auch auf dem Läufer, d.h. es handelt sich um Doppelschenkelpolmaschinen. Hierbei ist eine konzentrierte Wicklung auf jedem Ständerpol vorgesehen, aber es gibt keine Wicklungen oder Magnete auf dem Läufer. Jedes Paar mit den diametral entgegengesetzten Ständerpolwicklungen ist in Reihe oder parallel geschaltet, um eine unabhängige Maschinenphasenwicklung der mehrphasigen SR-Maschine zu bilden. Ein Motordrehmoment wird erzeugt, indem der Strom in jeder Motorphasenwicklung in einer bestimmten Sequenz geschaltet wird, die mit der Winkelposition des Läufers synchronisiert ist, so daß sich eine magnetische Anziehungskraft zwischen den Läuferpolen und den Ständerpolen ergibt, die sich einander nähern. Der Strom wird in jeder Motorphase abgeschaltet, bevor die Läuferpole, die den Ständerpolen dieser Phase am nächsten sind, sich an der ausgerichteten Position vorbeidrehen. Das erzeugte Drehmoment ist von der Richtung des Stromes unabhängig, so daß Stromimpulse in einer Richtung, die mit der Rotorbewegung synchronisiert sind, an die Ständerpolwicklungen durch einen Wechselrichter angelegt werden können, in welchem den Strom in einer Richtung schaltende Elemente wie Transistoren oder Thyristoren benutzt werden.

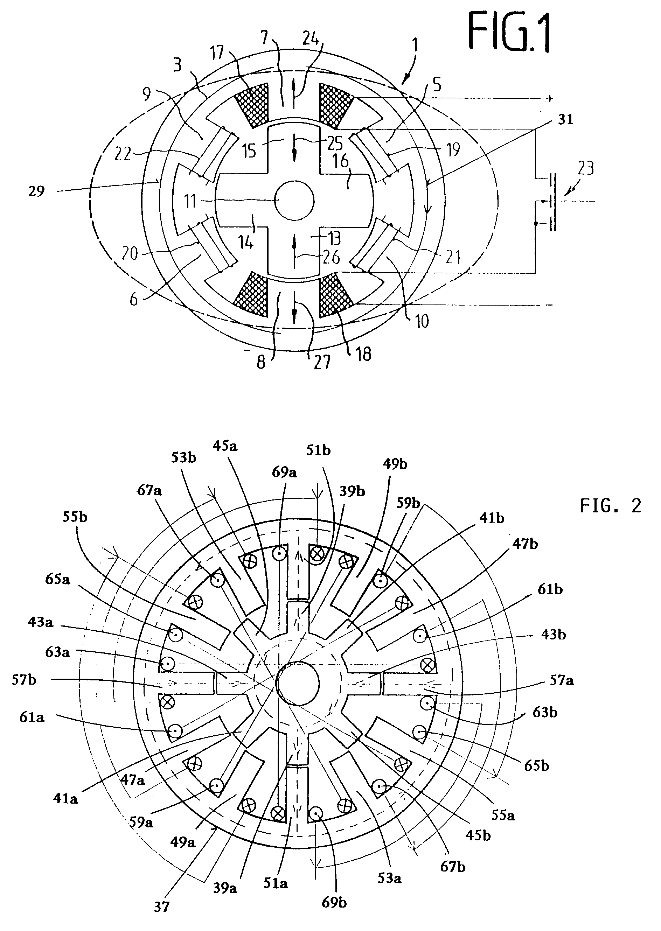

Bekannte Reluktanzmotoren weisen sechs Statorpole und vier Rotorpole auf, wobei deren ringförmiges Statorjoch aus elektrischen Gründen eine konstante Dicke aufweist. Aufgrund der elektromagnetischen Kräfte zwischen den Ankerpolen und den erregten Statorpolen kommt es hierbei zu einer umlaufenden elliptischen Verformung des Statorgehäuses, was in Figur 1 gestrichelt dargestellt ist. Durch Fortschalten der Statorerregung kommt es zu periodisch auftretenden Verformungen des Statorgehäuses, welche zu Drehmomentschwankungen führen und störende Motor- oder Maschinengeräusche erzeugen.

Durch eine ältere Patentanmeldung werden die störenden Drehmomentenschwankungen und Geräusche bei geschalteten Reluktanzmotoren dadurch vermieden, daß die Außenkontur des Statorjoches an den durch die elektromagnetischen Kräfte zwischen den Rotorpolen und den erregten Statorpolen beanspruchten biegekritischen Stellen Verstärkungen aufweisen.

In einer weiteren bekannten alternativen Ausführungsform eines SR-Motorantriebes weist jede Motorphase wenigstens zwei Paare von diametral entgegengesetzten Ständerpolen auf. Eine Ständerpolwicklung ist auf jedem Pol gewickelt, und die Polwicklungen auf diametral entgegengesetzten Polen sind zu Paaren zusammengefaßt und entweder in Reihe oder parallel geschaltet. Hierbei sind mehrere unabhängige Wechselrichter vorgesehen, wobei die Anzahl der Wechselrichter gleich der Anzahl der Ständerwicklungen ist, die jeder Motorphase entspricht. Hierdurch werden auch die Verformungen des Statorgehäuses vermieden, aber die Herstellungskosten für diesen Reluktanzmotor steigen im Vergleich z. B. zu einem Asynchronmotor mit sechs Schaltern im Umrichter erheblich.

Weiterhin weisen die oben genannten bekannten geschalteten Reluktanzmotoren sechs Statorpole und vier Rotorpole auf, wodurch diese Motoren bei ähnlich guten oder höheren Wirkungsgraden im Vergleich zu einem Asynchronmotor jedoch niedrige Herstellungskosten aufweisen. Allerdings haben diese SR-Motoren eine höhere Drehmomentenwelligkeit, welche durch Erhöhung der Anzahl der Pole von z. B. sechs Stator- und vier Rotorpolen auf acht Stator- und sechs Rotorpole verringert werden kann. Ein Nachteil dieser Maßnahme ist aber, daß im Wechselrichter die Zahl der Leistungsschalter steigt und damit die Kosten für acht Schalter im Vergleich zum Asynchronmotor mit sechs Schaltern im Wechselstromrichter steigen.

Der Erfindung liegt nun die Aufgabe zugrunde, einen geschalteten Reluktanzmotor, insbesondere als Antriebsmotor in elektrisch angetriebenen Kraftfahrzeugen, Waschmaschinen und/oder Rasenmähern zu schaffen, der sich gegenüber den bekannten Motoren, insbesondere den Asynchronmotoren, durch einen hohen Wirkungsgrad, niedrige Herstellungskosten und durch eine geringe Drehmomentenwelligkeit auszeichnet. Diese Aufgabe wird durch die im Patentanspruch gekennzeichneten Merkmale gelöst.

Der erfindungsgemäß SR-Motor zeichnet sich durch eine kostengünstige Herstellung aus, wobei z.B. bei drei Motorphasen und bei einer Verdopplung oder Verdreifachung der Stator- und Rotorpole auf 12/8 bzw. 18/12 wie beim Asynchronmotor höchsten sechs Leistungsschalter im Wechselrichter erforderlich sind.

In einer vorteilhaften Ausgestaltung des Erfindungsgegenstandes sind die Leistungsschalter zu einem Leistungsmodul zusammengefügt, welches zur Abführung von Verlustenergien auf dem wassergekühlten Gehäusemantel des Reluktanzmotors wärmeleitend angeordnet ist.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: einen Querschnitt durch einen geschalteten Reluktanzmotor bekannter Art mit sechs Stator- und vier Rotorpolen,
- Figur 2: einen Querschnitt durch einen SR-Motor gemäß der Erfindung aufgebaut mit in Reihe geschalteten Spulen,
- Figur 3A: einen Querschnitt durch einen SR-Motor mit zwei parallel geschalteten Statorpolwicklungspaaren,
- Figur 3B: eine Schaltungsanordnung des Wechselrichters mit sechs Leistungsschaltern für einen SR-Motor gemäß Figur 3A,
- Figur 4A: einen Querschnitt durch einen geschalteten SR-Motor mit in Reihe geschalteten Spulen von zwei Statorpolwicklungspaaren,
- Figur 4B: eine Schaltungsanordnung eines Wechselrichters für Figur 4A,
- Figur 5A: einen Querschnitt durch einen SR-Motor mit zwei parallel geschalteten Statorpolwicklungspaaren,
- Figur 5B: eine Schaltungsanordnung des Wechselrichters mit sechs Leistungsschaltern für Figur 5A,
- Figur 6A: einen Querschnitt durch einen SR-Motor mit zwei in Reihe geschalteten Statorpolwicklungspaaren,
- Figur 6B: eine Schaltungsanordnung für einen SR-Motor gemäß Figur 6A,
- Figur 7: einen Querschnitt durch einen SR-Motor mit zwei parallel beaufschlagbaren Statorpolwicklungspaaren in einer anderen Wicklungsausführung,
- Figur 8: den Gehäusemantel des SR-Motors mit einem mit diesem wärmeleitend verbundenen Leistungsmodul und
- Figur 9: eine Schaltungsanordnung für einen Wechselrichter mit nur vier Leistungsschaltern und mit nur vier Rücklaufdioden.

Die Figur 1 betrifft eine Schnittgestaltung eines üblichen Reluktanzmotors, insbesondere eines geschalteten Reluktanzmotors 1 für einen Positionierungsbetrieb in Kraftfahrzeugen, wobei das aus lamellierten Blechteilen bestehende Statorjoch 3 ringförmig ausgebildet und eine konstante Dicke aufweist. Dieses Statorjoch 3 weist ausgeprägte und z. B. sechs Statorpole 5/6, 7/8, 9/10 auf. In dem Statorjoch 3 ist in bekannter Weise ein Rotor 11 mit ausgeprägten, lemellierten Rotorpolen 13, 14, 15, 16 drehbar gelagert.

Weiterhin sind Magnetfeld erzeugende Spulen 17, 18, 19, 20, 21, 22 auf die Statorpole 5, 6, 7, 8, 9, 10 aufgewickelt, wobei je zwei sich gegenüberliegende Wicklungen 5/6, 7/8 und 9/10 mit einer Gleichspannungsquelle 23 verbunden sind. Hierbei werden die einzelnen Wicklungspaare 17/18, 19/20 und 21/22 zur Erzeugung von den Rotor 11 durchdringenden, veränderbaren Magnetfeldern in Synchronisierung mit den Rotorpositionen sequentiell ein- und ausgeschaltet. Hierbei entstehen elektromagnetische Kräfte zwischen den Rotorpolen 13, 14, 15, 16 und den jeweils erregten Statorpolen 5, 6, 7, 8, 9, 10, die gemäß Figur 1 in den Pfeilrichtungen 24 und 25 bzw. 26 und 27 wirken und zu einer elliptischen Verformung des Stators bzw. des Statorjoches 3 hervorgerufen. Diese Verformungen bewirken eine Näherung des Stators zum Rotor 11, welcher wiederum zu Drehmomentenschwankungen und zu Motor- und Maschinengeräuschen führen. Eine elliptische Verformung ist übertrieben in der Figur 1 gestrichelt dargestellt. Durch Fortschalten der Statorerregung kommt es zu einer umlaufenden elliptischen Verformung des Statorjochs 3 mit sechs Maxima und sechs Minima entsprechend der Anzahl der Statorpole.

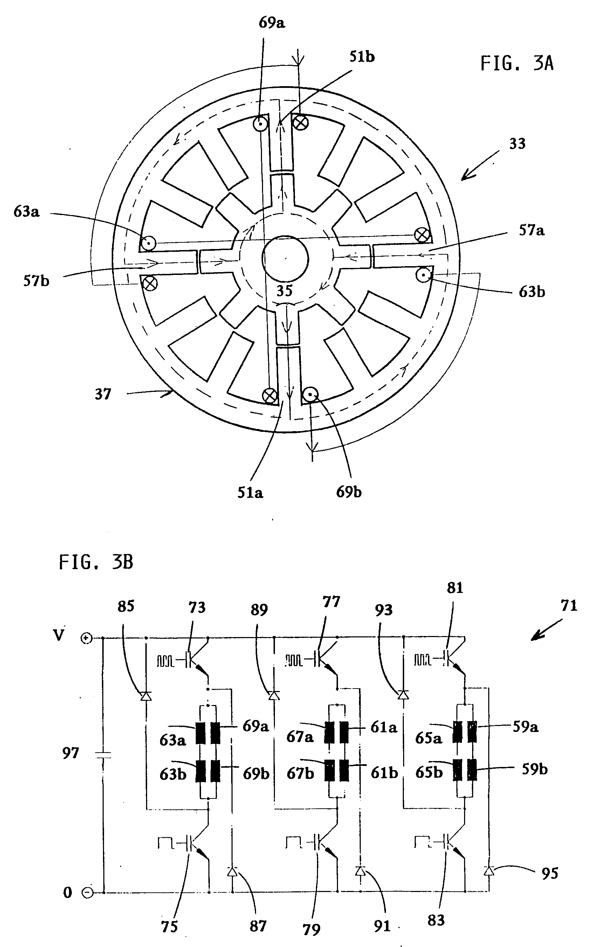

Üblicherweise sind die Statorpolwicklungen 17/18, 19/20 und 21/22 der entgegengesetzten oder Gegenstatorpolpaare zur Bildung einer Motorphasenwicklung in Reihe geschaltet, so daß der Strom in jeder Phase insgesamt eine magnetische Flußverkettung erzeugt, die einen Fluß in den Richtungen erzeugt, welche durch Pfeile 29 und 31 in der Figur 1 angegeben sind. Durch Fortschalten der Statorerregung kommt es hierbei auch zu einem Wechsel der Richtung des magnetischen Flusses in dem Rücken des Stators, wodurch Energieverluste entstehen. Es kommt hierbei, insbesondere bei niedrigen Drehzahlen, zu Drehmomentenwelligkeiten. Diese Nachteile werden durch einen dreiphasigen SR-Motor 33, der in der Figur 2 dargestellt ist, vermieden. Dieser SR-Motor 33 hat einen Läufer 35 innerhalb eines stationären Stators 37. Der Läufer 35 hat vier Paare von diametral entgegengesetzten Läuferpolen 39a/39b, 41a/41b, 43a/43b, 45a/45b. Der Stator 37 hat sechs Paar diametral entgegengesetzte Statorpole 47a/47b, 49a/49b, 51a/51b, 53a/53b, 55a/55b und 57a/57b, die mit jeweils in Reihe geschalteten Gegenstatorpolwicklungspaaren 59a/59b, 61a/61b, 63a/63b, 65a/65b, 67a/67b und 69a/69b versehen sind.

Auf diese Weise weist jede Motorphase zwei Paar diametral entgegengesetzte Statorpolwicklungen auf. So bilden die beiden Statorpolwicklungspaare 69a/69b und 63a/63b eine der drei Motorphasen des Reluktanzmotors 33, siehe Figur 3. Hierbei sind die beiden zusammengehörigen Statorpolwicklungen 69a und 69b bzw. 63a und 63b jeweils in Reihe geschaltet, während die beiden Statorwicklungspaare 63a/63b und 69a/69b zueinander parallel geschaltet sind, siehe Figur 3B. In dieser Figur 3B ist eine Schaltungsanordnung eines Wechselrichters 71 mit den drei Phasenzweigen für den SR-Motor 33 dargestellt. Jeder Wechselrichterphasenzweig entspricht einer gesonderten Motorphase und umfaßt zwei Halbleiterschalter 73/75, 77/79 und 81/83 und zwei Freilaufdioden 85/87, 89/91 und 93/95. Diese an die entsprechenden Statorpolwicklungen 63a/63b, 69a/69b, 67a/67b, 61a/61b, 65a/65b, 59a/59b angeschlossenen Freilaufdioden 85, 87, 89, 91, 93, 95 lassen die induktiven Wicklungsströme im Kreis fließen.

Die drei Wechselrichterphasenzweige sind übrigens zueinander parallel geschaltet und werden durch eine Gleichstromquelle, z.B. eine Batterie oder eine gleichgerichtete Wechselstromquelle, gespeist, die an den parallelen Wechselrichterphasenzweigen eine Gleichspannung einprägt. Eine Kapazität 97 ist zum Herausfiltern von transienten Spannungen, welche durch das Ein- und Ausschalten der Spulen in den Motorphasen entstehen, vorgesehen.

Zum Schalten des Reluktanzmotors 33 mit n x 4 Rotorpolen und n x 3 Paaren entgegengesetzter Statorpole bzw. Statorpolwicklungen ist immer nur ein Wechselrichter 71 erforderlich, wobei n immer größer als oder gleich 2 ist. Da die Anzahl der Leistungsschalter in dem Wechselrichter 71 bei der Erhöhung der Statorpole auf 12, 18, 24, 30 ... stets gleich bleibt, ist der SR-Umrichter (Figur 3B) 33 auch von den Kosten her sehr günstig.

Gemäß der Figur 3B hat der Wechselrichter 71 sechs Leistungsschalter 73, 75, 77, 79, 81, 83 und sechs Rücklaufdioden 85, 87, 89, 91, 93, 95, wobei jeder Phasenzweig zwei Statorpolwicklungspaare 63a/63b, 69a/69b, 67a/67b, 61a/61b und 65a/65b, 59a/59b aufweist. Statt der bipolaren Sperrschichttransistoren aufweisenden Leistungsschalter 73, 75, 77, 79, 81, 83 sind auch andere Stromschaltvorrichtungen wie z. B. Feldeffekttransistoren einsetzbar.

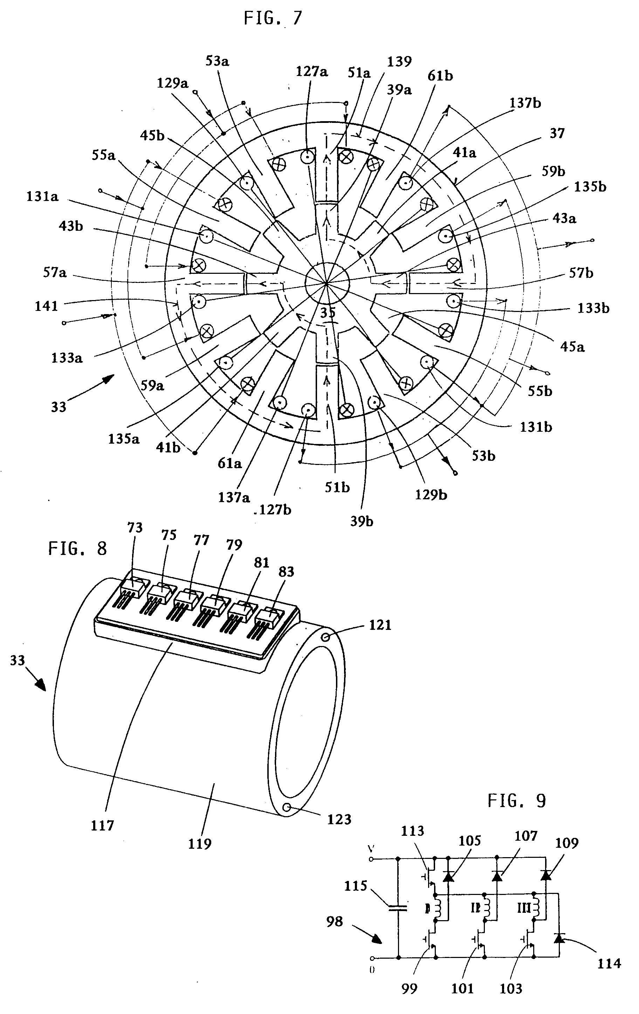

Zum Schalten des SR-Motors 33 kann erfindungsgemäß auch ein bekannter Wechselrichter 98 gemäß Figur 9 eingesetzt werden. Jeder Wechselrichterphasenzweig umfaßt einen Leistungsschalter 99, 101, 103, eine Freilaufdiode 105, 107, 109 und mindestens 2 x 3 Statorwicklungspaare I, II, III. Weiterhin sind für alle Wechselrichterphasenzweige gemeinsam noch ein Leistungsschalter 111 und eine Freilaufdiode 113 vorgesehen. Ebenfalls ist auch eine Kapazität 115 zum Herausfiltern von transienten Spannungen vorhanden.

Um die Verlustenergie abzuführen, sind die Wechselrichter 71, 98 mit den Leistungsschaltern 73, 75, 77, 79, 81, 83; 99, 101, 103, 113, den Freilaufdioden 85, 87, 89, 91, 93, 95; 105, 107, 109, 115 und mit den Kapazitäten 97, 115 zu einem Leistungsmodul 117 zusammengefügt, welches mit dem Gehäusemantel 119 des SR-Motors 33 in wärmeleitender Verbindung steht, siehe Figur 8. Diese Kühlung kann noch dadurch verbessert werden, wenn der Gehäusemantel 119 mit mehreren Führungskanälen 121, 123 für eine ständig durchlaufende Kühlflüssigkeit versehen wird.

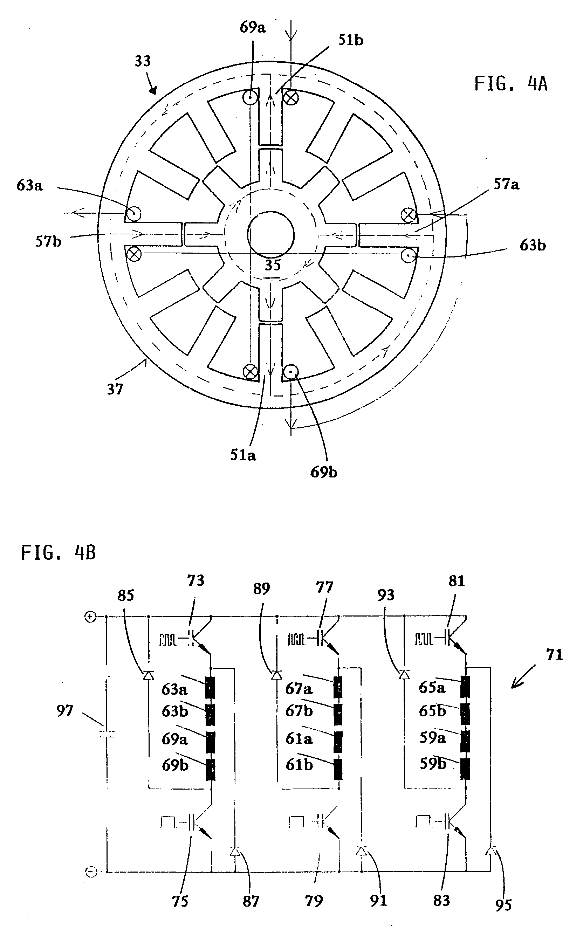

Im Rahmen der Erfindung können die diametral entgegengesetzt angeordneten Statorpolwicklungen eines jeden Statorpolwicklungspaares und die Statorpolwicklungspaare selbst zueinander und/oder in Reihe geschaltet werden. So sind gemäß den Figuren 4A und 4B, sowohl die einzelnen zusammengehörigen Statorpolwicklungen 69a/69b und 63a/63b jedes Statorpolwicklungspaares 69a/69b bzw. 63a/63b als auch die beiden Statorpolwicklungspaare 69a/69b und 63a/63b zueinander alle in Reihe geschaltet.

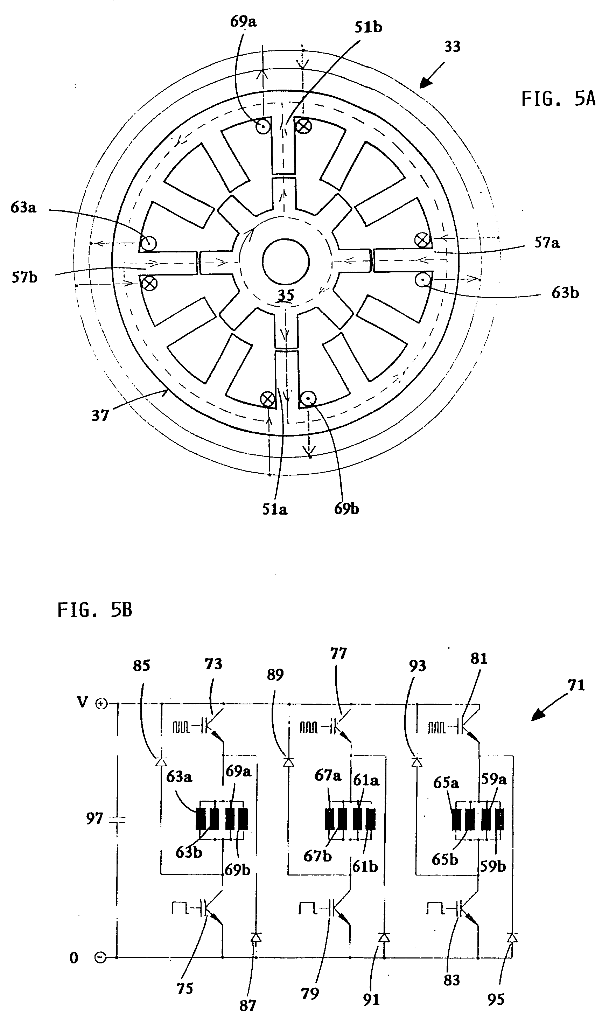

Bei dem Ausführungsbeispiel gemäß den Figuren 5a und 5b sind die diametral entgegengesetzt angebrachten Statorpolwicklungen 63a/63b bzw. 69a/69b und die aus diesen gebildeten Statorpolwicklungspaare 63a/63b und 69a/69b alle zueinander parallel geschaltet.

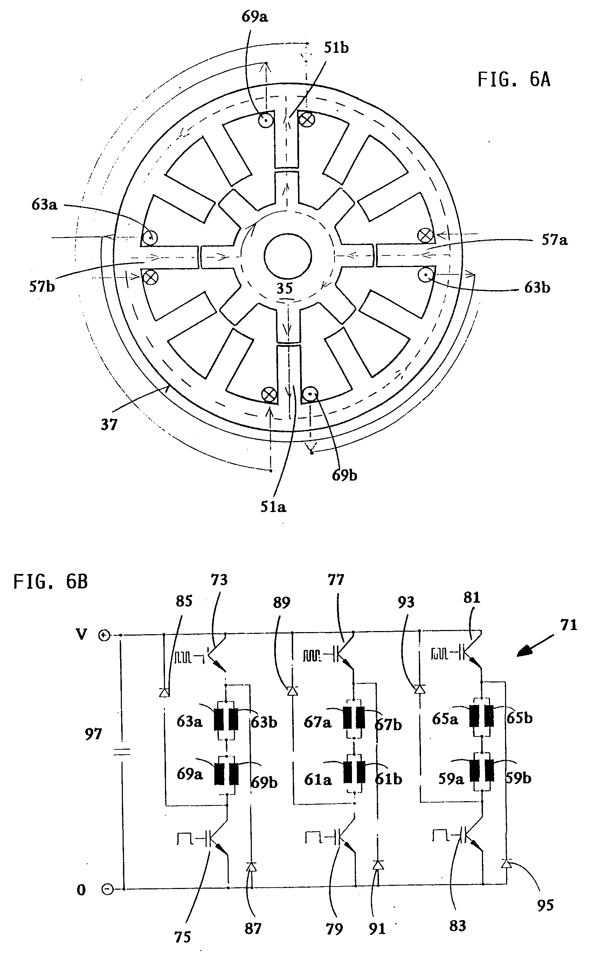

Schließlich zeigen die Figuren 6A und 6B noch eine Anordnung, bei der die einzelnen Statorpolwicklungen 63a/63b; 69a/69b jedes Statorpolwicklungspaares parallel zueinander geschaltet sind. Allerdings sind für die für jede Motorphase vorgesehenen Wicklungspaare 63a/63b und 69a/69b in Reihe geschaltet.

In den Figuren 3A, 4A, 5A und 6A sind jeweils nur die Statorpolwicklungen für zwei zusammengehörige Wicklungspaare 63a/63b und 69a/69b dargestellt, während in der Figur 2 alle Statorpolwicklungen des SR-Motors 33 enthalten sind. Hierbei weisen die beiden diametral angeordneten Statorpolwicklungen 59a/59b, 61a/61b, 63a/63b, 65a/65b, 67a/67b und 69a/69b eines jeden Statorpolwicklungspaares auf den zugehörigen Statorpolen 49a/49b, 47a/47b, 51a/51b, 53a/53b, 55a/55b und 57a/57b die gleiche Aufwickelrichtung auf, wobei die hintereinander angeordneten Statorpolwicklungen 69a, 67a, 65a, 63a, 61a, 59a, 69b, 67b, 65b, 63b, 61b und 59b jeweils in zwei gegenüberliegenden Vierteln der Innenumfangsfläche 125 des Stators 33 eine gleiche erste Aufwickelrichtung aufweisen. Die Statorpole 47a, 49a, 51a, 53a, 55a, 57a, 47b, 49b, 51b, 53b und 55b sind alle gleichmäßig auf der Innenumfangsfläche 125 des Stators 37 verteilt angeordnet, derart, daß bei zwölf Statorpolen gemäß den Figuren 2 bis 6 in jedem Viertel drei Statorpole angeordnet sind.

Der gemäß den Figuren 3 bis 6 aufgebaute SR-Motor 33 ermöglicht eine optimale Ausnutzung des Eisenweges. Der Streufluß ist sehr gering, da dieser sich in den unbestromten Polen aufhebt.

Eine noch bessere Ausgestaltung des SR-Motors 33 bezüglich der magnetischen Verluste wird gemäß einer Bewicklung der Statorpole nach Figur 7 erzielt. Hierbei sind die beiden diametral entgegengesetzt angeordneten Statorpolwicklungen 127a/127b, 129a/129b, 131a/131b, 133a/133b, 135a/135b und 137a/137b eines jeden Statorpolwicklungspaares 127a und 127b, 129a und 129b, 131a und 131b, 133a und 133b, 135a und 135b und 137a und 137b auf den zugehörigen Statorpolen 51a, 53a, 55a, 57a, 59a, 61a, 51b, 53b, 55b, 57b, 59b und 61b entgegengesetzt aufgewickelt, wobei die in der einen Umfangshälfte des Stators 37 hintereinander angeordneten Statorpolwicklungen 127a, 129a, 131a, 133a, 135a und 137a auf den Statorpolen 51a, 53a, 55a, 57a, 59a und 61a eine gleiche erste Wicklungsrichtung und die in der anderen Umfangshälfte des Stators 37 hintereinander angeordneten Statorpolwicklungen 127b, 129b, 131b, 133b, 135b und 137b auf den Statorpolen 51b, 53b, 55b, 57b, 59b und 61b alle eine zu der ersten Wicklungsrichtung entgegengesetzte zweite Wicklungsrichtung aufweisen.

Die Bestromung der Statorpolwicklungspaare kann z. B. ebenfalls über die in den Figuren 3B, 4B, 5B, 6B dargestellten Schaltungsanordnungen erfolgen, wobei auch nur ein Wechselrichter 71 mit sechs Leistungsschaltern bei einem SR-Motor mit drei Phasenzweigen erforderlich ist. Der Vorteil dieser Bewicklung des Stators 37 besteht darin, daß der magnetische Fluß nicht in den ganzen Rücken des Stators 37 und des Rotors 35, sondern jeweils nur in zwei gegenüberliegenden Viertelflächen gemäß den Pfeilrichtungen 139, 141 bzw. 140, 142 in Figur 7 erfolgt.

Der geschaltete Reluktanzmotor gemäß der Erfindung ist auch vorteilhaft als Antriebsmotor in Waschmaschinen, Rasenmähern, Servolenkeinrichtungen und sonstigen Maschinen einsetzbar.

## Patentansprüche

1. Geschalteter Reluktanzmotor, insbesondere als Antriebsmotor in elektrisch angetriebenen Kraftfahrzeugen, Waschmaschinen und/oder Rasenmähern, **gekennzeichnet durch**
- einen Rotor (35) mit n x 4 - Rotorpolen (39a, 41a, 43a, 45a, 39b, 41b, 43b, 45b)
- einen Stator (37) mit n x 3 Paaren entgegengesetzter Statorpole (47a, 49a, 51a, 53a, 55a, 57a, 47b 49b, 51b, 53b, 55b, 57b) und mit je einer um jeden Statorpol (47a, 49a, 51a, 53a, 55a, 57a, 47b, 49b, 51b, 53b, 55b, 57b) gewickelten Statorpolwicklung (59a, 61a, 63a, 65a, 67a, 69a, 59b, 61b, 63b, 65b, 67b, 69b),
- n-Paare entgegengesetzter Statorpole (47a/47b, 49a/49b, 51a/51b, 53a/53b, 55a/55b, 57a/57b) für jede Motorphase, wobei n größer als oder gleich 2 ist,
- einen Leistungswechselrichter (71, 98) mit mehreren parallel zueinander geschalteten Wechselrichterphasenzweigen, wobei jeder Wechselrichterphasenzweig einer gesonderten Motorphase entspricht und mindestens einen Leistungsschalter (73, 75, 77, 79, 81, 83) aufweist, welcher mit den derselben Motorphase entsprechenden n-Motorphasenwicklungspaaren in Reihe geschaltet ist und
- durch eine Gleichstromquelle, die an den Wechselrichterphasenzweigen eine Gleichspannung einprägt.

2. Reluktanzmotor nach Anspruch 1, **dadurch gekennzeichnet,** daß jeder Wechselrichterphasenzweig je zwei Leistungsschalter (73, 75; 77, 79; 81, 83) aufweist, welche mit den derselben Motorphase entsprechenden n-Motorphasenwicklungspaaren jeweils in Reihe geschaltet sind.

3. Reluktanzmotor nach Anspruch 1 oder 2, **dadurch gekennzeichnet,** daß jeder Phasenzweig wenigstens eine Freilaufdiode (85, 87, 89, 91, 93, 95) aufweist, die an die entsprechende Statorpolwicklung (59a, 61a, 63a, 65a, 67a, 69a, 59b, 61b, 63b, 65b, 67b, 69b) angeschlossen ist, um induktive Wicklungsströme im Kreise fließen zu lassen.

4. Reluktanzmotor nach Anspruch 1, 2 oder 3, **dadurch gekennzeichnet,** daß jeder Phasenzweig zwei Freilaufdioden (85, 87; 89, 91; 93, 95) aufweist, die an die entsprechenden Statorpolwicklungen (59a, 61a, 63a, 65a, 67a, 69a, 59b, 61b, 63b, 65b, 67b, 69b) angeschlossen sind, um induktive Wicklungsströme nach Betätigung eines der beiden Leistungsschalter (73, 75; 77, 79; 81, 83) fließen zu lassen.

5. Reluktanzmotor nach einem der Ansprüche 1 bis 4, **dadurch gekennzeichnet;** daß die Statorpolwicklungspaare (59a/59b, 61a/61b, 63a/63b, 65a/65b, 67a/67b, 69a/69b) von jedem Paar entgegengesetzter Statorpole (47a/47b, 49a/49b, 51a/51b, 53a/53b, 55a/55b, 57a/57b) in Reihe geschaltet sind.

6. Reluktanzmotor nach einem der Ansprüche 1 bis 4, **dadurch gekennzeichnet,** daß die Statorpolwicklungspaare (59a/59b, 61a/61b, 63a/63b, 65a/65b, 67a/67b, 69a/69b) von jedem Paar entgegengesetzter Statorpole (51a/51b, 53a/53b, 55a/55b, 57a/57b) parallel geschaltet sind.

7. Reluktanzmotor nach einem der vorhergehenden Ansprüche, **dadurch gekennzeichnet,** daß die für jede Motorphase vorgesehenen n-Paare entgegengesetzter Statorpolwicklungen (63a/63b, 69a/69b; 61a/61b, 67a/67b; 59a/59b, 65a/65b) auf den Statorpolen (51a/51b, 57a/57b; 47a/47b, 53a/53b; 49a/49b, 55a/55b) in Reihe geschaltet sind.

8. Reluktanzmotor nach einem der vorhergehenden Ansprüche, **dadurch gekennzeichnet** daß die für jede Motorphase vorgesehenen n-Paare entgegengesetzter Statorpolwicklungen (63a/63b, 69a/69b; 61a/61b, 67a/67b; 59a/59b, 65a/65b) auf den Statorpolen (51a/51b, 57a/57b; 47a/47b, 53a/53b; 49a/49b, 55a/55b) parallel geschaltet sind.

9. Reluktanzmotor nach einem der vorhergehenden Ansprüche, **dadurch gekennzeichnet,** daß die Statorpole (47a, 49a, 51a, 53a, 55a, 57a, 47b, 49b, 51b, 53b, 55b, 57b) jedes Paares entgegengesetzter Statorpole diametral entgegengesetzt angeordnet sind.

10. Reluktanzmotor nach einem der vorhergehenden Ansprüche, **dadurch gekennzeichnet,** daß die beiden diametral entgegengesetzt angeordneten Statorpolwicklungen (127a/127b, 129a/129b, 131a/131b, 133a/133b, 135a/135b, 137a/137b) eines jeden Statorpolwicklungspaares auf den zugehörigen Statorpolen entgegengesetzt aufgewickelt sind, wobei die in der einen Umfangshälfte des Stators (37) hintereinander angeordneten Statorpolwicklungen (127a, 129a, 131a, 133a, 135a, 137a) auf den Statorpolen (51a, 53a, 55a, 57a, 59a, 61a) alle eine gleiche erste Wicklungsrichtung und die in der anderen Umfangshälfte des Stators (37) hintereinander angeordneten Statorpolwicklungen (127b, 129b, 131b, 133b, 135b, 137b) auf den Statorpolen (51b, 53b, 55b, 57b, 59b und 61b) alle eine zu der ersten Wicklungsrichtung entgegengesetzte zweite Wicklungsrichtung aufweisen.

11. Reluktanzmotor nach einem der vorhergehenden Ansprüche, **dadurch gekennzeichnet,** daß die beiden diametral entgegengesetzt angeordneten Statorpolwicklungen (59a, 61a, 63a, 65a, 67a, 69a, 59b, 61b, 63b, 65b, 67b, 69b) eines jeden Statorpolwicklungspaares (59a/59b, 61a/61b, 63a/63b, 65a/65b, 67a/67b) auf den zugehörigen Statorpolen die gleiche Aufwickelrichtung aufweisen, wobei die hintereinander angeordneten Statorpolwicklungen (59a, 61a, 63a; 59b, 61b, 63b) jeweils in zwei gegenüberliegenden Vierteln auf der Innenumfangsfläche (125) des Stators (37) eine gleiche erste Aufwickelrichtung und die Statorpolwicklungen (65a, 67a, 69a, 65b, 67b, 69b) in den beiden anderen gegenüberliegenden Vierteln der Umfangsfläche (125) eine gleiche, zu der ersten Aufwickelrichtung entgegengesetzt ausgeführte, zweite Aufwickelrichtung aufweisen.

12. Reluktanzmotor nach einem der vorhergehenden Ansprüche, **dadurch gekennzeichnet,** daß der Wechselrichter (71) mit den Leistungsschaltern (73, 75, 77, 79, 81, 83) zu einem Leistungsmodul (117) zusammengefügt ist, welches auf dem Gehäusemantel (119) des Reluktanzmotors (33) wärmeleitend angeordnet ist.

13. Reluktanzmotor nach Anspruch 12, **dadurch gekennzeichnet,** daß der Gehäusemantel (119) mittels Wasserkühlung gekühlt wird.

14. Reluktanzmotor nach Anspruch 1 oder 2, **dadurch gekennzeichnet,** daß der Leistungswechselrichter (98) einen zweiten Leistungsschalter (113) aufweist, der mit dem ersten Leistungsschalter (99) und den mit diesen in Reihe geschalteten Motorphasenwicklungspaaren (I) der einzelnen parallel angeordneten Motorphasenzweigen in Reihe geschaltet ist.

15. Reluktanzmotor nach Anspruch 1, 2 oder 14, **dadurch gekennzeichnet,** daß der Leistungswechselrichter eine weitere Freilaufdiode (114) aufweist, die über eine Parallelschaltung mit den ersten Leistungsschaltern (99, 113) und mit den entsprechenden Statorpolwicklungen (I, II, III) in den einzelnen Motorphasenzweigen verbunden ist, um induktive Wicklungsströme im Kreis fließen zu lassen.
